# EUROPÄISCHE PATENTANMELDUNG

(11) **EP 2 230 810 A1**
(43) Veröffentlichungstag der Anmeldung: **22.09.2010**
(21) Anmeldenummer: 09003985.0
(22) Anmeldetag: 19.03.2009
(51) Int. Cl.: H04L 29/06

(54) **Anbindung mobiler Geräte an einen Terminalserver**

(71) Anmelder: TM3 Software GmbH, 93055 Regensburg (DE)
(72) Erfinder: Wölfl, Thomas, 93047 Regensburg (DE)
(74) Vertreter: Graf von Stosch, Andreas

(57) **Zusammenfassung**

Es wird ein Verfahren zum Verbinden eines mobilen Geräts mit einem Terminalserver in einem Kommunikationssystem beschrieben, wobei das Kommunikationssystem das mobile Gerät, den Terminalserver und ein Vermittlungsmodul umfasst. Das Verfahren umfasst den Aufbau einer ersten Datenverbindung zwischen dem mobilen Gerät und dem Vermittlungsmodul, den Aufbau einer Terminalprotokollverbindung zwischen dem mobilen Gerät und dem Terminalserver, das Starten einer Terminalsitzung zur Unterstützung der Terminalprotokollverbindung auf Seiten des Terminalservers, den Aufbau einer zweiten Datenverbindung zwischen der Terminalsitzung und dem Vermittlungsmodul, das Identifizieren der ersten Datenverbindung und der zweiten Datenverbindung als zusammengehörig auf Seiten des Vermittlungsmoduls, und das Zusammenschalten der ersten Datenverbindung und der zweiten Datenverbindung zu einem zusätzlichen Datenübertragungspfad zwischen der Terminalsitzung des Terminalservers und dem mobilen Gerät.

## Beschreibung

Die Erfindung betrifft ein Verfahren zum Verbinden eines mobilen Geräts mit einem Terminalserver. Des Weiteren betrifft die Erfindung ein Kommunikationssystem mit einem mobilen Gerät, einem Terminalserver und einem Vermittlungsmodul.

Mobile Geräte, die selbst nur wenig Speicher- und Verarbeitungskapazität besitzen, können mit Hilfe eines Terminalprotokolls an einen Terminalserver angebunden werden. Durch das Terminalprotokoll können Eingaben, die der Benutzer an seinem mobilen Gerät tätigt, zu dem Terminalserver übertragen werden. Auf Seiten des Terminalservers werden Nutzanwendungen ausgeführt, die die vom mobilen Gerät übermittelten Eingaben empfangen und verarbeiten. Die von der jeweiligen Nutzanwendung erzeugte graphische Ausgabe wird mittels des Terminalprotokolls zum mobilen Gerät übermittelt und dort am Display angezeigt. Für den Benutzer entsteht so der Eindruck, als würde die Nutzanwendung auf seinem mobilen Gerät ausgeführt werden.

Terminalprotokolle sind standardmäßig für die Übertragung von Tastatureingaben und graphischen Ausgaben vorgesehen und bieten relativ wenig Möglichkeiten zur flexiblen Anpassung an spezielle Anforderungen. Beispielsweise wird die Anbindung einer auf Seiten des mobilen Geräts vorhandenen Spezialhardware von den bekannten Terminalprotokollen in der Regel nicht unterstützt.

Es ist Aufgabe der Erfindung, eine verbesserte und flexiblere Anbindung mobiler Geräte an einen Terminalserver zur Verfügung zu stellen.

Diese Aufgabe der Erfindung wird durch ein Verfahren zum Verbinden eines mobilen Geräts mit einem Terminalserver gemäß Anspruch 1 sowie durch ein Kommunikationssystem gemäß Anspruch 14 gelöst.

Das erfindungsgemäße Verfahren dient zum Verbinden eines mobilen Geräts mit einem Terminalserver in einem Kommunikationssystem, wobei das Kommunikationssystem das mobile Gerät, den Terminalserver und ein Vermittlungsmodul umfasst. Das Verfahren umfasst den Aufbau einer ersten Datenverbindung zwischen dem mobilen Gerät und dem Vermittlungsmodul, den Aufbau einer Terminalprotokollverbindung zwischen dem mobilen Gerät und dem Terminalserver, das Starten einer Terminalsitzung zur Unterstützung der Terminalprotokollverbindung auf Seiten des Terminalservers, und den Aufbau einer zweiten Datenverbindung zwischen der Terminalsitzung und dem Vermittlungsmodul. Darüber hinaus umfasst das Verfahren das Identifizieren, auf Seiten des Vermittlungsmoduls, der ersten Datenverbindung und der zweiten Datenverbindung als zusammengehörig, und das Zusammenschalten der ersten Datenverbindung und der zweiten Datenverbindung zu einem zusätzlichen Datenübertragungspfad zwischen der Terminalsitzung des Terminalservers und dem mobilen Gerät.

Zusätzlich zu der Terminalprotokollverbindung, die das mobile Gerät mit dem Terminalserver verbindet, wird gemäß den Ausführungsformen der vorliegenden Erfindung ein zusätzlicher Datenübertragungspfad zwischen dem mobilen Gerät und dem Terminalserver etabliert. Dabei wird der Datenübertragungspfad letztlich mit der auf dem Terminalserver laufenden Nutzanwendung hergestellt, bzw. mit mehreren auf dem Terminalserver laufenden Nutzanwendungen. Über diesen zusätzlichen Datenübertragungspfad können beispielsweise Daten zwischen dem mobilen Gerät und dem Terminalserver ausgetauscht werden, deren Übertragung in dem Terminalprotokoll nicht vorgesehen ist. Mit Hilfe dieses zusätzlichen Datenübertragungspfads kann die Datenübertragung zwischen mobilem Gerät und Terminalserver flexibel an die jeweilige Anwendung beziehungsweise an die Besonderheiten des jeweiligen Geräts angepasst werden. Durch diese flexible Ergänzung der relativ starr festgelegten Terminalprotokollanbindung wird der Anwendungsbereich des TerminalClient-Konzepts deutlich erweitert.

Zum Aufbau des zusätzlichen Datenübertragungspfads werden eine erste Teilverbindung zwischen dem mobilen Gerät und dem Vermittlungsmodul und eine zweite Teilverbindung zwischen der zugehörigen Terminalsitzung und dem Vermittlungsmodul aufgebaut. Auf Seiten des Vermittlungsmoduls werden zusammengehörige Teilverbindungen miteinander verschaltet. Dadurch, dass die Teilverbindungen zum Vermittlungsmodul hin aufgebaut werden und das Vermittlungsmodul an allen Teilverbindungen beteiligt ist, wird die Verwaltung der Teilverbindungen vereinfacht. Falls es auf einer Teilverbindung zu Übertragungsfehlern kommt, kann die Teilverbindung auf einfache Weise neu aufgebaut werden.

Gemäß einer vorteilhaften Ausführungsform der Erfindung handelt es sich bei dem Terminalprotokoll um das Protokoll RDP. Das Protokoll RDP (Remote Desktop Protokoll) ist eines der bekanntesten Terminalprotokolle und unterstützt die Übertragung von Tastatureingaben und graphischen Ausgaben zwischen einem mobilen Gerät und einem Terminalserver.

Gemäß einer vorteilhaften Ausführungsform der Erfindung handelt es sich bei der ersten Datenverbindung um mindestens eine der folgenden: eine Mobilfunkverbindung, eine Netzwerkverbindung, eine Internetverbindung, eine TCP/IP-Verbindung.

Gemäß einer vorteilhaften Ausführungsform handelt es sich bei der zweiten Datenverbindung um mindestens eine der folgenden: eine Mobilfunkverbindung, eine Netzwerkverbindung, eine Internetverbindung, eine TCP/IP-Verbindung.

Gemäß einer vorteilhaften Ausführungsform ist das Vermittlungsmodul entweder auf dem Terminalserver oder auf einem anderen Server installiert. Falls das Terminalmodul ebenfalls auf dem Terminalserver installiert ist, wird die zweite Datenverbindung als interne Datenverbindung zwischen dem Vermittlungsmodul und dem Terminalserver implementiert. Bei umfangreicheren Kommunikationssystemen mit einer Vielzahl von mobilen Geräten könnte es dagegen sinnvoll sein, für das Vermittlungsmodul einen separaten Serverrechner vorzusehen.

Gemäß einer vorteilhaften Ausführungsform umfasst das Vermittlungsmodul erste Ports für erste Datenverbindungen zu mobilen Geräten und zweite Ports für zweite Datenverbindungen zu Terminalsitzungen des Terminalservers.

Gemäß einer vorteilhaften Ausführungsform umfasst das mobile Gerät eine Spezialhardware, deren Anbindung an den Terminalserver über den zusätzlichen Datenübertragungspfad erfolgt. Die Anbindung der Spezialhardware wird von gängigen Terminalprotokollen in der Regel nicht unterstützt. Bei der erfindungsgemäßen Lösung wird ein zusätzlicher Datenübertragungspfad parallel zur Terminalprotokollverbindung aufgebaut, über den diejenigen Daten zwischen mobilem Gerät und Terminalserver ausgetauscht werden können, die nicht mittels des Terminalprotokolls übertragen werden können. Tastatureingaben und Displayausgaben können auch weiterhin über die Terminalprotokollverbindung übertragen werden.

Gemäß einer vorteilhaften Ausführungsform werden über den zusätzlichen Datenübertragungspfad Steuerbefehle zur Ansteuerung der Spezialhardware übermittelt. Gemäß einer vorteilhaften Ausführungsform werden über den zusätzlichen Datenübertragungspfad von der Spezialhardware erfasste Daten übermittelt.

Gemäß einer vorteilhaften Ausführungsform umfasst das Verfahren das Starten eines Clientmoduls auf Seiten des mobilen Geräts und den Aufbau der ersten Datenverbindung durch das Clientmodul. Vorzugsweise umfasst das Verfahren das Hochstarten eines Terminalclient durch das Clientmodul auf Seiten des mobilen Geräts und den Aufbau der Terminalprotokollverbindung durch den Terminalclient. Entsprechend einer vorteilhaften Ausführungsform umfasst das mobile Gerät eine Spezialhardware, wobei die Spezialhardware durch das Clientmodul gesteuert wird.

Gemäß einer vorteilhaften Ausführungsform umfasst das Verfahren das Starten einer Nutzanwendung innerhalb der Terminalsitzung auf Seiten des Terminalservers nach dem Starten der Terminalsitzung auf Seiten des Terminalservers. Der Terminalserver bietet ausreichende Verarbeitungs- und Speicherkapazitäten, so dass die Nutzanwendung dort mit hoher Geschwindigkeit ausgeführt werden kann. Da das mobile Gerät sowohl über die Terminalprotokollverbindung als auch über den zusätzlichen Datenübertragungspfad mit dem Terminalserver in Verbidnung steht, kann dem Benutzer des mobilen Geräts der Eindruck vermittelt werden, als würde die Nutzanwendung unmittelbar auf dem mobilen Gerät ablaufen.

Gemäß einer vorteilhaften Ausführungsform wird zusammen mit der Nutzanwendung ein zugehöriges Servermodul innerhalb der Terminalsitzung gestartet, wobei der Aufbau der zweiten Datenverbindung durch das Servermodul vorgenommen wird.

Insbesondere ist es von Vorteil, wenn die Nutzanwendung innerhalb der Terminalsitzung automatisch mittels einer Autostartfunktion gestartet wird. Alternativ dazu kann die Nutzanwendung innerhalb der Terminalsitzung durch eine auf Seiten des mobilen Geräts erfolgende Benutzereingabe gestartet werden.

Gemäß einer vorteilhaften Ausführungsform werden innerhalb der Terminalsitzung zwei oder mehr Nutzanwendungen gestartet, wobei für jede der Nutzanwendungen eine separate zweite Datenverbindung zu dem Vermittlungsmodul aufgebaut wird, und wobei der zusätzliche Datenübertragungspfad die erste Datenverbindung und die mindestens zwei zweiten Datenverbindungen umfasst. Auf diese Weise kann das mobile Gerät mit zwei oder mehr Nutzanwendungen Daten austauschen.

Gemäß einer vorteilhaften Ausführungsform umfasst das Verfahren das Überwachen der Übertragungsqualität der ersten Datenverbindung und/oder der zweiten Datenverbindung, und, falls die Übertragungsqualität der ersten und/oder der zweiten Datenverbindung nicht mehr zufriedenstellend ist, den erneuten Aufbau der ersten und/oder der zweiten Datenverbindung. Das Vermittlungsmodul ist dazu vorgesehen, die jeweils aktuellen Datenverbindungen zu verwalten und geeignet zu verschalten.

Gemäß einer vorteilhaften Ausführungsform umfasst das Verfahren einen oder mehrere der folgenden Schritte: Übermitteln einer Gerätekennung des mobilen Geräts über die erste Datenverbindung an das Vermittlungsmodul; auf Seiten des Vermittlungsmoduls, Zuordnen einer Gerätekennung des mobilen Geräts zu der ersten Datenverbindung; Übermitteln einer Gerätekennung des mobilen Geräts über die Terminalprotokollverbindung zum Terminalserver; Starten der Terminalsitzung auf Seiten des Terminalservers unter einer Gerätekennung des mobilen Geräts; Übermitteln einer Gerätekennung des mobilen Geräts über die zweite Datenverbindung von der Terminalsitzung zu dem Vermittlungsmodul; und, auf Seiten des Vermittlungsmoduls, Identifizieren der ersten Datenverbindung und der zweiten Datenverbindung als zusammengehörig anhand einer Gerätekennung des mobilen Geräts.

Gemäß einer vorteilhaften Ausführungsform wird die Gerätekennung des mobilen Geräts beim Hochstarten des Terminalclient in Form eines Benutzernamens übergeben und anschließend über die Terminalverbindung zum Terminalserver übertragen. Gemäß einer alternativen Ausführungsform wird die Gerätekennung des mobilen Geräts beim Hochstarten des Terminalclient mit Hilfe eines RDP Virtual Channels übergeben..

Gemäß einer vorteilhaften Ausführungsform umfasst das Verfahren das Erzeugen eines Eintrags, bei oder nach dem Aufbau der ersten Datenverbindung, in einer auf Seiten des Vermittlungsmoduls vorgesehenen Vermittlungstabelle, welcher die Gerätekennung des mobilen Geräts und eine Identifikation der ersten Datenverbindung umfasst, das Ermitteln, bei oder nach dem Aufbau der zweiten Datenverbindung, eines zu der Gerätekennung des mobilen Geräts vorhandenen Eintrags in der Vermittlungstabelle, und Ergänzen des Eintrags um eine Identifikation der zweiten Datenverbindung. Der Eintrag in der Vermittlungstabelle gibt an, welche erste Datenverbindung mit welcher bzw. welchen zweiten Datenverbindung(en) zu einem zusätzlichen Datenübertragungspfad zusammengeschaltet ist.

Das erfindungsgemäße Kommunikationssystem umfasst ein mobiles Gerät, einen Terminalserver und ein Vermittlungsmodul. Das mobile Gerät ist dazu ausgelegt, eine erste Datenverbindung zu dem Vermittlungsmodul aufzubauen und eine Terminalprotokollverbindung zu dem Terminalserver aufzubauen. Der Terminalserver ist dazu ausgelegt, zur Unterstützung der Terminalprotokollverbindung eine Terminalsitzung zu starten und von der Terminalsitzung aus eine zweite Datenverbindung zu dem Vermittlungsmodul aufzubauen. Das Vermittlungsmodul ist dazu ausgelegt, die erste Datenverbindung und die zweite Datenverbindung als zusammengehörig zu identifizieren und zu einem zusätzlichen Datenübertragungspfad zwischen der Terminalsitzung des Terminalservers und dem mobilen Gerät zusammenzuschalten.

Nachfolgend wird die Erfindung anhand mehrerer in der Zeichnung dargestellter Ausführungsbeispiele weiter beschrieben. Es zeigen:
- Fig. 1: eine Anbindung eines mobilen Geräts an einen Terminalserver mit Hilfe eines Terminalprotokolls gemäß dem Stand der Technik;
- Fig. 2: eine erfindungsgemäße Anbindung eines mobilen Geräts an einen Terminalserver mit Hilfe eines Terminalprotokolls, das um einen zusätzlichen Datenübertragungspfad ergänzt ist;
- Fig. 3: ein Beispiel eines mobilen Geräts für Anwendungen im Logistikbereich, welches eine Spezialhardware aufweist; und
- Fig. 4: ein erfindungsgemäßes Kommunikationssystem, das mehrere an einen Terminalserver angebundene mobile Geräte umfasst.

Bei einer Vielzahl von mobilen Geräten sind die lokalen Ressourcen, also insbesondere der lokal verfügbare Speicher sowie die Rechenkapazität, beschränkt. Um auf mobilen Geräten auch solche komplexere Anwendungen nutzen zu können, bei denen die erforderlichen Verarbeitungs- und Speicherressourcen nicht durch das mobile Gerät selbst zur Verfügung gestellt werden können, werden diese mobilen Geräte über eine drahtgebundene oder drahtlose Schnittstelle mit einem Server verbunden, auf dem die jeweilige Nutzanwendung installiert ist. Eine Möglichkeit zur Anbindung eines mobilen Geräts an einen Server ist es, das mobile Gerät über ein Terminal- bzw. Thin-Client-Protokoll an einen sogenannten Terminalserver anzubinden. Im Rahmen einer Terminalprotokollverbindung werden lediglich graphische Ausgaben, d. h. die Bildschirmdarstellung, vom Terminalserver zum mobilen Gerät übermittelt, während Benutzereingaben, die am mobilen Gerät beispielsweise per Maus oder Tastatur getätigt werden, in Gegenrichtung vom mobilen Gerät zum Terminalserver übermittelt werden.

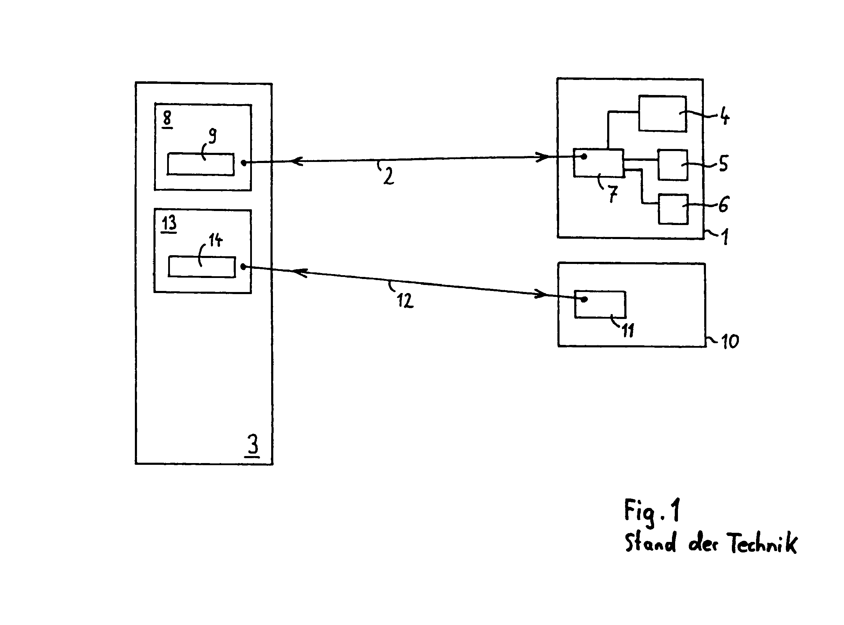

In Fig. 1 ist schematisch dargestellt, wie ein mobiles Gerät 1 über eine Terminalprotokollverbindung 2 mit einem Terminalserver 3 verbunden wird. Das mobile Gerät 1 umfasst ein Display 4, eine Tastatur 5 sowie weitere Eingabemittel 6 für Benutzereingaben, beispielsweise eine Maus oder einen Touchscreen. Auf dem mobilen Gerät 1 ist ein sogenannter Terminalclient 7 für den Aufbau und die Unterstützung der Terminalverbindung 2 vorgesehen. Über den Terminalclient 7 verbindet sich das mobile Gerät über eine Online-Verbindung mit dem Terminalserver 3, und auf Seiten des Terminalservers 3 wird dann eine zugehörige Terminalsitzung 8 gestartet. Im Rahmen dieser Terminalsitzung 8 kann dann eine Nutzanwendung 9 gestartet werden, deren graphische Ausgaben über die Terminalprotokollverbindung 2 zum Terminalclient 7 übertragen und auf dem Display 4 dargestellt werden. Benutzereingaben, die über die Tastatur 5 oder die Eingabemittel 6 vom Benutzer vorgenommen werden, können in Gegenrichtung über die Terminalprotokollverbindung 2 zur Nutzanwendung 9 übertragen werden.

Auf Seiten des mobilen Geräts 1 ergibt sich für einen Benutzer der Eindruck, als würde die Nutzanwendung 9 unmittelbar auf dem mobilen Gerät 1 laufen. Wie aus Fig. 1 ersichtlich ist, erfolgt die Ausführung der Nutzanwendung 9 jedoch ausschließlich auf Seiten des Terminalservers 3, so dass die beschränkten lokalen Ressourcen des mobilen Geräts nicht mit der Programmausführung belastet werden.

Das in Fig. 1 dargestellte Terminalserver-Konzept unterstützt die Durchführung von mehreren simultan stattfindenden Terminalprotokollverbindungen. Beispielsweise kann ein zweites mobiles Gerät 10, auf dem ein zweiter Terminalclient 11 installiert ist, eine weitere Terminalverbindung 12 zu dem Terminalserver 3 aufbauen. Auf Seiten des Terminalservers 3 wird dann eine zugehörige zweite Terminalsitzung 13 gestartet. Im Rahmen dieser zweiten Sitzung 13 kann dann eine Nutzanwendung 14 für das zweite mobile Gerät 10 ausgeführt werden, wobei die Eingaben und Ausgaben der Nutzanwendung 14 über die Terminalprotokollverbindung 12 zwischen der Nutzanwendung 14 und dem Terminalclient 11 ausgetauscht werden.

Es gibt eine Reihe von verschiedenen Terminalprotokollen, mit deren Hilfe sich die benötigten Terminalprotokollverbindungen realisieren lassen. Das bekannteste Beispiel eines derartigen Protokolls ist das Protokoll RDP (Remote Desktop Protocol) der Fa. Microsoft, das auf dem ITU-Protokoll T.128 basiert. RDP ist ein Protokoll der Ebenen 4 bis 7 des OSI-Modells, wobei als Transportprotokoll meist TCP/IP eingesetzt wird.

Terminalprotokolle wie beispielsweise RDP sind standardmäßig zur Übertragung von graphischen Ausgaben sowie Maus- und Tastatureingaben vorgesehen. Bei vielen Anwendungen ergibt sich jedoch die Notwendigkeit, zusätzlich zu der durch das Terminalprotokoll standardmäßig bereitgestellten Datenübertragung zusätzliche Nutzdaten zwischen Terminalclient und Terminalserver auszutauschen. Durch die Ausführungsformen der vorliegenden Erfindung wird zusätzlich zu der Terminalprotokollverbindung eine weitere Datenverbindung zwischen Terminalserver und Terminalclient eröffnet, die zur Übertragung von zusätzlichen Daten genutzt werden kann, die nicht über das jeweilige Terminalprotokoll übertragen werden können. Über diesen zusätzlichen Übertragungskanal können beispielsweise Steuerbefehle und/oder Daten, die im Zusammenhang mit einer auf Seiten des mobilen Geräts vorgesehenen Spezialhardware anfallen, zwischen Terminalserver und Terminalclient ausgetauscht werden.

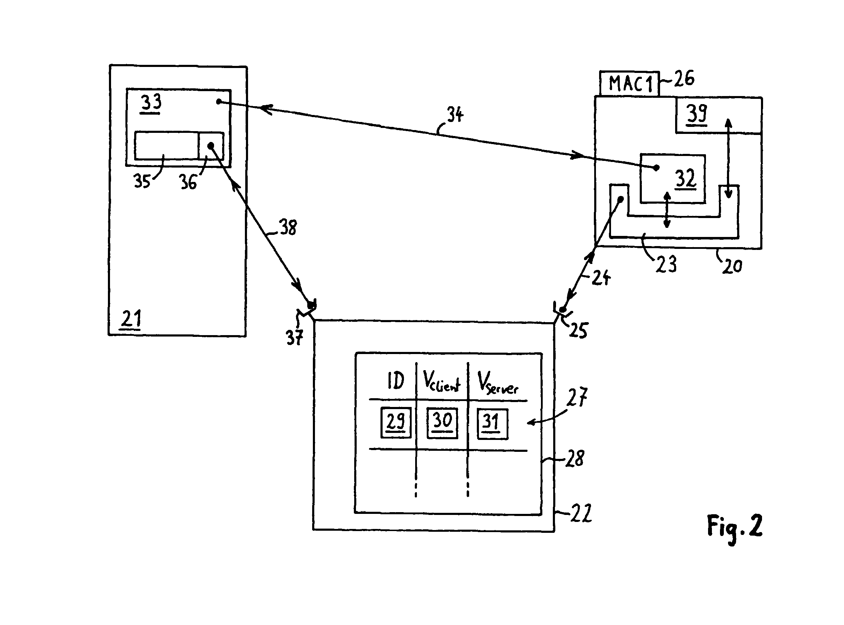

Anhand von Fig. 2 wird im Folgenden der erfindungsgemäße Aufbau eines zusätzlichen Übertragungskanals zwischen einem mobilen Gerät 20 und einem Terminalserver 21 beschrieben. Das Gesamtsystem umfasst zusätzlich zum mobilen Gerät 20 und zum Terminalserver 21 ein Vermittlungsmodul 22. Das Vermittlungsmodul 22 kann entweder auf demselben Rechner installiert sein, auf dem auch der Terminalserver 21 läuft, kann aber auch auf einem separaten Rechner installiert sein.

Zunächst wird auf Seiten des mobilen Geräts 20 ein Clientmodul 23 gestartet, welches im nächsten Schritt eine Datenverbindung 24 zum Vermittlungsmodul 22 aufbaut. Vorzugsweise handelt es sich bei der Datenverbindung 24 um eine TCP/IP-Verbindung. Die Datenverbindung 24 kann beispielsweise vom Clientmodul 23 aus zu einem clientseitigen Port 25 des Vermittlungsmoduls 22 aufgebaut werden.

Im nächsten Schritt wird eine Anmeldenachricht über die clientseitige Datenverbindung 24 vom Clientmodul 23 zum Vermittlungsmodul 22 übertragen. In dieser Anmeldenachricht übermittelt das Clientmodul 23 eine spezifische Gerätekennung des mobilen Geräts 20 an das Vermittlungsmodul 22. Bei einer bevorzugten Ausführungsform der Erfindung wird die MAC-Adresse 26 des mobilen Geräts 20 als spezifische Gerätekennung zum Vermittlungsmodul 22 übermittelt.

Das Vermittlungsmodul 22 empfängt die Anmeldenachricht und ordnet die darin enthaltene Gerätekennung der ersten Datenverbindung 24 fest zu. Vorzugsweise geschieht dies durch Erzeugen eines entsprechenden Eintrags 27 in einer Vermittlungstabelle 28, die von dem Vermittlungsmodul 22 verwaltet wird. Der Eintrag 27 umfasst die Gerätekennung 29 des mobilen Geräts 20, eine Identifikation 30 der clientseitigen Datenverbindung 24 sowie einen leeren Speicherplatz 31, in den später eine Identifikation einer zugeordneten serverseitigen Datenverbindung eingetragen werden kann.

Wenn der Eintrag 27 in der Vermittlungstabelle 28 angelegt ist, kann optional eine Bestätigungsnachricht vom Vermittlungsmodul 22 zum Clientmodul 23 übertragen werden, mit der das Clientmodul 23 über die erfolgreiche Anmeldung informiert wird.

Nachdem die clientseitige Datenverbindung 24 aufgebaut und in die Vermittlungstabelle 28 eingetragen wurde, wird als Nächstes eine Terminalprotokollverbindung 34 zwischen dem mobilen Gerät 20 und dem Terminalserver 21 aufgebaut. Hierzu startet das Clientmodul 23 auf Seiten des mobilen Geräts 20 einen Terminalclient 32 und übergibt dem Terminalclient 32 die Gerätekennung, also beispielsweise die MAC-Adresse 26. Beim Hochstarten des Terminalclients 32 kann ein Benutzername für die Terminalprotokollverbindung angegeben werden, und insofern kann die Übergabe der Gerätekennung vom Clientmodul 23 an den Terminalclient 32 vorzugsweise dadurch erfolgen, dass das Clientmodul 23 die Gerätekennung gegenüber dem Terminalclient 32 als Benutzername spezifiziert. Alternativ dazu kann die Gerätekennung aber auch auf andere Weise an den Terminalclient 32 übergeben werden. Beispielsweise ist es innerhalb des Terminalprotokolls RDP möglich, die Gerätekennung über einen sogenannten "RDP Virtual Channel" an den Terminalclient 32 zu übergeben.

Als Nächstes meldet sich der Terminalclient 32 beim Terminalserver 21 an. Dies geschieht vorzugsweise durch Übermitteln einer Anmeldenachricht vom Terminalclient 32 zum Terminalserver 21. In der Anmeldenachricht wird der Benutzername, der gegenüber dem Terminalclient 32 angegeben wurde, mit übertragen, entsprechend der bevorzugten Ausführungsform also die Gerätekennung des mobilen Geräts 20. Insbesondere kann mit der Anmeldenachricht die MAC-Adresse 26 des mobilen Geräts 20 zum Terminalserver 21 übertragen werden.

Auf Seiten des Terminalservers wird nach Empfang dieser Anmeldenachricht eine zugehörige Terminalsitzung 33 gestartet. Über die Terminalprotokollverbindung 34 sieht der Benutzer des mobilen Geräts 20 am Display des mobilen Geräts 20 eine von der Terminalsitzung 33 zur Verfügung gestellte Benutzeroberfläche. Eingaben, die der Benutzer über das mobile Gerät 20 vornimmt, werden ab jetzt über die Terminalprotokollverbindung 34 zur Terminalsitzung 33 übermittelt. Entsprechend einer bevorzugten Ausführungsform läuft die Terminalsitzung 33 unter dem gegenüber dem Terminalclient 32 spezifizierten Benutzernamen, also vorzugsweise unter der MAC-Adresse 26 des mobilen Geräts 20. Gemäß einer alternativen Ausführungsform kann die Gerätekennung aus dem oben erwähnten RDP Virtual Channel abgefragt werden.

Im nächsten Schritt wird innerhalb der Terminalsitzung 33 eine Nutzanwendung 35 gestartet, die dem Benutzer des mobilen Geräts 20 über die Terminalprotokollverbindung 34 zur Verfügung stehen soll. Gemäß einer bevorzugten Ausführungsform wird die Nutzanwendung 35 beim Hochstarten der Terminalsitzung 33 automatisch mit Hilfe einer Autostartfunktion gestartet. Gemäß einer alternativen Ausführungsform erfolgt das Starten der Nutzanwendung 35 vom mobilen Gerät 20 aus durch Eingeben einer entsprechenden Benutzereingabe.

In die Nutzanwendung 35 ist ein Servermodul 36 integriert, welches zusammen mit der Nutzanwendung 35 hochgestartet wird. Aufgabe des Servermoduls 36 ist es, eine serverseitige Datenverbindung zum Vermittlungsmodul 22 aufzubauen. Hierzu liest das Servermodul 36 zunächst aus der Terminalsitzung 33 die als Benutzername verwendete Gerätekennung des mobilen Geräts 20 aus. Anschließend meldet sich das Servermodul 36 mittels einer Anmeldenachricht bei dem Vermittlungsmodul 22 an, wobei zusammen mit der Anmeldenachricht die Gerätekennung des mobilen Geräts 20 zum Vermittlungsmodul 22 übermittelt wird. Auf diese Weise wird zwischen dem Servermodul 36 und einem serverseitigen Port 37 des Vermittlungsmoduls 22 eine serverseitige Datenverbindung 38 aufgebaut, die vorzugsweise als TCP/IP-Verbindung realisiert wird.

Bei der in Fig. 2 gezeigten Ausführungsform ist für die clientseitigen Datenverbindungen ein clientseitiger Port 25 vorgesehen, während für die serverseitigen Datenverbindungen ein serverseitiger Port 37 bereitgestellt ist. Auf diese Weise kann vom Vermittlungsmodul 22 unmittelbar erkannt werden, ob es sich bei einer eingehenden Datenverbindung um eine clientseitige oder um eine serverseitige Datenverbindung handelt. Allerdings ist es nicht zwingend erforderlich, zur Unterscheidung der verschiedenen Datenverbindungen separate Ports für die clientseitigen Datenverbindungen und die serverseitigen Datenverbindungen zur Verfügung zu stellen. Gemäß einer alternativen Ausführungsform könnte beim Aufbau einer jeweiligen Datenverbindung ein Parameter zum Vermittlungsmodul 22 übertragen werden, der angibt, ob es sich bei der neu aufzubauenden Datenverbindung um eine clientseitige Datenverbindung oder um eine serverseitige Datenverbindung handelt.

Als nächstes wird die Vermittlungstabelle 28 auf Seiten des Vermittlungsmoduls 22 nach einem bestehenden Eintrag zu derjenigen Gerätekennung durchsucht, die vom Servermodul 36 in der Anmeldenachricht übermittelt wurde. Im Regelfall wurde bereits beim Aufbau der clientseitigen Datenverbindung 24 ein entsprechender Eintrag in der Vermittlungstabelle 28 angelegt. Falls kein entsprechender Eintrag in der Vermittlungstabelle 28 gefunden wird, wird eine Fehlermeldung an das Servermodul 36 übermittelt.

Bei dem in Fig. 2 gezeigten Beispiel wird der zur Gerätekennung des mobilen Geräts 20 gehörige Eintrag 27 gefunden, der neben der Gerätekennung 29 auch die Identifikation der clientseitigen Datenverbindung 24 umfasst. Mit Hilfe des Eintrags 27 können die clientseitige Datenverbindung 24 und die serverseitige Datenverbindung 38 als zusammengehörig identifiziert werden. Zur Vervollständigung des Eintrags 27 wird eine Identifikation der serverseitigen Datenverbindung 38 in den entsprechenden leeren Speicherplatz 31 des Eintrags 27 geschrieben. Der Eintrag 27 umfasst nun die Gerätekennung 29 des mobilen Geräts 20, die Identifikation der clientseitigen Datenverbindung 24 und die Identifikation der serverseitigen Datenverbindung 38.

Das Vermittlungsmodul 22 ist dazu ausgelegt, clientseitige und serverseitige Datenverbindungen, die als zusammengehörig erkannt wurden, zusammenzuschalten. Im Beispiel von Fig. 2 wird daher die clientseitige Datenverbindung 24 mit der serverseitigen Datenverbindung 38 zusammengeschaltet. Dies bedeutet, dass Nachrichten, die über die serverseitige Datenverbindung 38 empfangen werden, zur clientseitigen Datenverbindung 24 weitergeleitet werden, während umgekehrt Nachrichten, die über die clientseitige Datenverbindung 24 empfangen werden, zur serverseitigen Datenverbindung 38 weitergeleitet werden. In einer konkreten technischen Ausführung kann dies beispielsweise bedeuten, dass Daten von einem Netzwerk-Kanal gelesen und auf einen anderen Netzwerk-Kanal geschrieben werden. Durch dieses Zusammenschalten der clientseitigen Datenverbindung 24 und der serverseitigen Datenverbindung 38 entsprechend dem Eintrag 27 wird eine zusätzliche Datenverbindung geschaffen, die das Clientmodul 23 des mobilen Geräts 20 mit dem Servermodul 36 des Terminalservers 21 verbindet. Die so etablierte zusätzliche Übertragungsstrecke verläuft parallel zur Terminalprotokollverbindung 34 und ist daher in der Lage, zusätzliche Nutzdaten zwischen dem Servermodul 36 und dem Clientmodul 23 auszutauschen, welche nicht über die eigentliche Terminalprotokollverbindung 34 übertragen werden können.

Das Problem, zusätzliche Nutzdaten zwischen dem Clientmodul 23 und dem Servermodul 36 übertragen zu müssen, stellt sich beispielsweise dann, wenn das mobile Gerät 20 eine zusätzliche Spezialhardware 39 umfasst, deren Ansteuerung nicht von den gängigen Terminalprotokollen unterstützt wird. Beispielsweise unterstützen Terminalprotokolle wie beispielsweise RDP die Anbindung von Tastatur und Maus, während die Anbindung von zusätzlichen Hardwarekomponenten, beispielsweise eines Barcodescanners oder einer Fotokamera, schwierig sein kann. Mit Hilfe des durch die erfindungsgemäße Lösung zur Verfügung gestellten zusätzlichen Übertragungskanals wird eine flexible Anbindung der Spezialhardware 39 an eine auf Seiten des Terminalservers 21 laufende Nutzanwendung 35 auch dann ermöglicht, wenn die Terminalprotokollverbindung 34 eine Anbindung der Spezialhardware 39 nicht bzw. nicht in der gewünschten Art und Weise vorsieht.

Steuerbefehle für die Spezialhardware 39 können von der Nutzanwendung 35 aus über das Servermodul 36 und die Datenverbindungen 38 und 24 zum Clientmodul 23 übermittelt werden, welches über spezifische Treiber die Spezialhardware 39 ansteuert. Umgekehrt können Daten, die von der Spezialhardware 39 erfasst wurden, zum Clientmodul 23 übertragen und von dort aus über die Datenverbindungen 24 und 38 zum Servermodul 36 übermittelt werden. Die Nutzanwendung 35 kann dann die von der Spezialhardware 39 erfassten Daten verarbeiten.

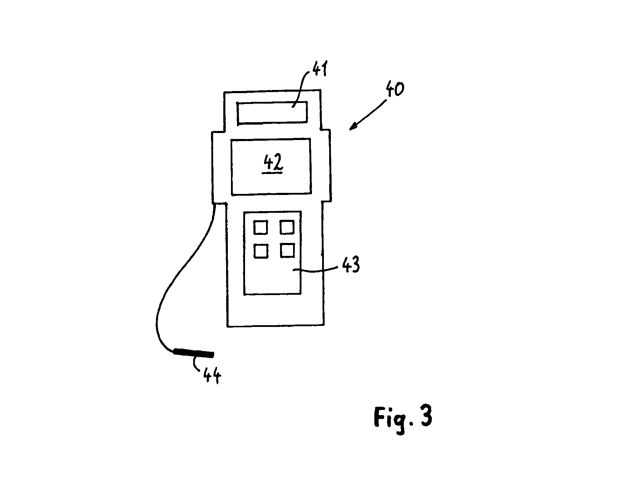

In Fig. 3 ist als konkretes Beispiel ein tragbarer Computer 40 gezeigt, der für Logistikanwendungen verwendet wird. Der tragbare Computer 40 umfasst einen Barcodescanner 41, einen Touchscreen 42, eine Tastatur 43 sowie einen Griffel 44 für Benutzereingaben. Der tragbare Computer 40 ist über ein drahtloses Netzwerk mit einem Terminalserver verbunden und tauscht über eine Terminalprotokollverbindung Daten mit einer auf Seiten des Terminalservers laufenden Nutzanwendung aus. Zur Anbindung des Barcodescanners 41 wird entsprechend der erfindungsgemäßen Lösung ein zusätzlicher Datenübertragungspfad zum Terminalserver aufgebaut, über den die Nutzanwendung Steuerbefehle und Daten mit dem Barcodescanner 41 austauschen kann.

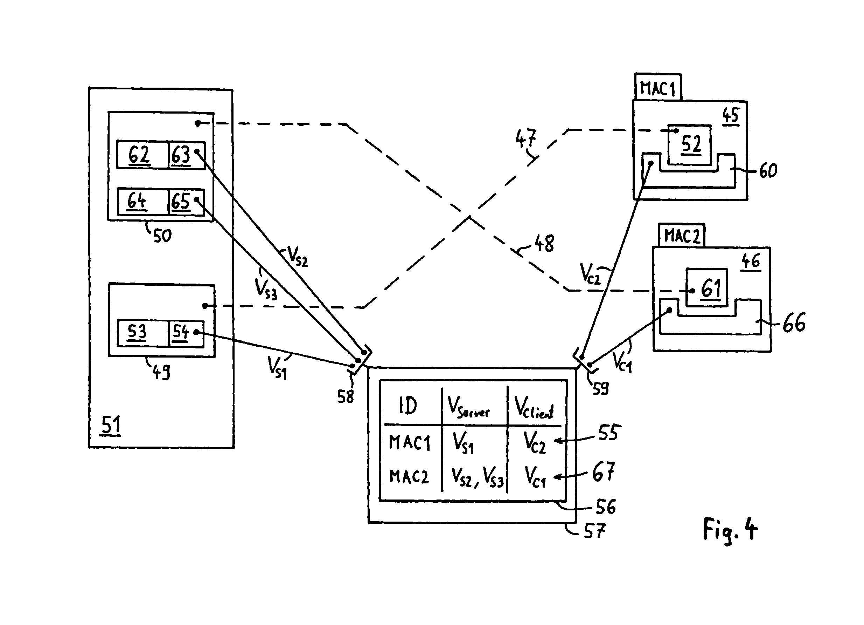

In Fig. 4 ist ein Ausführungsbeispiel gezeigt, bei dem mehrere mobile Geräte 45, 46 jeweils über eine eigene Terminalprotokollverbindung 47, 48 mit einer zugeordneten Terminalsitzung 49, 50 auf einem Terminalserver 51 verbunden sind. Dabei ist der Terminalserver 51 dazu ausgelegt, gleichzeitig mehrere Terminalsitzungen 49, 50 und Terminalprotokollverbindungen 47, 48 zu mobilen Geräten zu unterstützen.

Die Terminalprotokollverbindung 47 verbindet einen Terminalclient 52 des ersten mobilen Geräts 45 mit einer Terminalsitzung 49 des Terminalservers 51. Innerhalb der Terminalsitzung 49 des Terminalservers 51 läuft eine Nutzanwendung 53, der ein Servermodul 54 zugeordnet ist.

Entsprechend der erfindungsgemäßen Lösung gibt es parallel zu der Terminalprotokollverbindung 47 eine zusätzliche Datenverbindung für den Austausch zusätzlicher Nutzdaten. Diese zusätzliche Datenverbindung umfasst eine serverseitige Datenverbindung VS1 und eine clientseitige Datenverbindung VC2. Die beiden Datenverbindungen VS1 und VC2 sind durch einen entsprechenden Eintrag 55 in der Vermittlungstabelle 56 des Vermittlungsmoduls 57 als zueinander gehörig gekennzeichnet. Dieser Eintrag 55 bezieht sich auf die MAC-Adresse "MAC1" des ersten mobilen Geräts 45.

Die serverseitige Datenverbindung VS1 verbindet das zur Nutzanwendung 53 gehörige Servermodul 54 mit einem serverseiten Port 58 des Vermittlungsmoduls 57. Die clientseitige Datenverbindung VC2 verbindet einen clientseitigen Port 59 des Vermittlungsmoduls 57 mit einem Clientmodul 60 auf Seiten des ersten mobilen Geräts 45. Somit können über die beiden Datenverbindungen VS1 und VC2 zusätzliche Daten in beiden Richtungen zwischen der Nutzanwendung 53 und dem Clientmodul 60 ausgetauscht werden.

Auch zu der Terminalprotokollverbindung 48, die einen Terminalclient 61 des zweiten mobilen Geräts 46 mit der zugehörigen Terminalsitzung 50 verbindet, gibt es in Fig. 4 eine zusätzliche Datenverbindung. Innerhalb der Terminalsitzung 50 laufen eine erste Nutzanwendung 62 mit einem Servermodul 63 und eine zweite Nutzanwendung 64 mit einem Servermodul 65. Das Servermodul 63 ist über eine serverseitige Datenverbindung VS2 mit dem serverseitigen Port 58 des Vermittlungsmoduls 57 verbunden, und auch das Servermodul 65 ist über eine serverseitige Datenverbindung VS3 mit dem serverseiten Port 58 des Vermittlungsmoduls 57 verbunden. Der clientseitige Port 59 des Vermittlungsmoduls 57 ist über eine clientseitige Verbindung VC1 mit einem Clientmodul 66 auf Seiten des zweiten mobilen Geräts 46 verbunden.

Durch einen Eintrag 67 in der Vermittlungstabelle 56 wird die MAC-Adresse "MAC2" des zweiten mobilen Geräts 46 mit den serverseitigen Verbindungen VS2, VS3 und der clientseitigen Verbindung VC1 verknüpft. Die drei Datenverbindungen VS2, VS3, VC1 bilden zusammen eine zusätzliche Datenverbindung, welche sich parallel zur eigentlichen Terminalprotokollverbindung 48 zwischen dem zweiten mobilen Gerät 46 und der Terminalsitzung 50 erstreckt. Daten, die auf Seiten des zweiten mobilen Geräts 46 aufgenommen werden, gelangen über die Datenverbindungen VC1, VS2, VS3 zu den beiden Nutzanwendungen 62, 64 und können dort verarbeitet werden. In umgekehrter Richtung werden Steuerbefehle, die von der Nutzanwendung 62 erzeugt wurden, über die Datenverbindungen VS2, VC1 zum zweiten mobilen Gerät 46 gesendet, während Steuerbefehle, die von der Nutzanwendung 64 erzeugt wurden, über die Datenverbindungen VS3, VC1 zum zweiten mobilen Gerät 46 gesendet werden.

Aus diesem Beispiel ergibt sich, wie zwei oder mehr serverseitige Datenverbindungen an einer Datenverbindung zu einem mobilen Gerät beteiligt sein können. Die vom mobilen Gerät erfassten Daten können dann verschiedenen Nutzanwendungen innerhalb einer Terminalsitzung zugeführt werden. Umgekehrt können von beiden Nutzanwendungen aus Befehle zum mobilen Gerät übermittelt werden. Dagegen ist es nicht zulässig, Daten von einer in einer Terminalsitzung laufenden Nutzanwendung zu zwei verschiedenen mobilen Geräten zu übertragen. Jede Terminalsitzung ist jeweils nur mit einem mobilen Gerät verknüpft.

Während des Betriebs des in Fig. 4 gezeigten Kommunikationssystems kann es vorkommen, dass eine Datenverbindung zu einem der mobilen Geräte keine hinreichend gute Übertragungsqualität mehr zur Verfügung stellt, so dass es zu Übermittlungsfehlern kommt. In diesem Fall ist das Kommunikationssystem dazu ausgelegt, die fehlerhaft arbeitende Datenverbindung durch Durchführen eines sogenannten "Reconnect" neu aufzusetzen.

Diese Reconnect-Funktion soll im Folgenden anhand eines Beispiels erläutert werden, wobei angenommen wird, dass auf der Datenverbindung VC1 Übertragungsfehler auftreten. In diesem Fall wird die Datenverbindung VC1 durch das Clientmodul 66 beendet. Anschließend baut das Clientmodul 66 eine neue Datenverbindung VC3 zu dem clientseitigen Port 59 des Vermittlungsmoduls 57 auf, wobei mit der Anmeldenachricht die Gerätekennung des mobilen Geräts 46 zum Vermittlungsmodul 57 übertragen wird. Auf Seiten des Vermittlungsmoduls 57 wird die Vermittlungstabelle 56 nach Einträgen zur Gerätekennung des mobilen Geräts 46 durchsucht, und dabei wird der Eintrag "MAC2 / VS2,VS3 / VC1" gefunden. Dieser Eintrag "MAC2 / VS2,VS3 / VC1" wird dann durch den neuen Eintrag "MAC2 / VS2,VS3 / VC3" ersetzt.

## Patentansprüche

1. Verfahren zum Verbinden eines mobilen Geräts (20) mit einem Terminalserver (21) in einem Kommunikationssystem, wobei das Kommunikationssystem das mobile Gerät (20), den Terminalserver (21) und ein Vermittlungsmodul (22) umfasst, und wobei das Verfahren folgende Schritte aufweist:
- Aufbau einer ersten Datenverbindung (24) zwischen dem mobilen Gerät (20) und dem Vermittlungsmodul (22),
- Aufbau einer Terminalprotokollverbindung (34) zwischen dem mobilen Gerät (20) und dem Terminalserver (21),
- Starten einer Terminalsitzung (33) zur Unterstützung der Terminalprotokollverbindung (34) auf Seiten des Terminalservers (21),
- Aufbau einer zweiten Datenverbindung (38) zwischen der Terminalsitzung (33) und dem Vermittlungsmodul (22),
- auf Seiten des Vermittlungsmoduls (22), Identifizieren der ersten Datenverbindung (24) und der zweiten Datenverbindung (38) als zusammengehörig, und
- Zusammenschalten der ersten Datenverbindung (24) und der zweiten Datenverbindung (38) zu einem zusätzlichen Datenübertragungspfad zwischen der Terminalsitzung (33) des Terminalservers (21) und dem mobilen Gerät (20).

2. Verfahren nach Anspruch 1, **gekennzeichnet durch** mindestens eines der folgenden Merkmale:
- bei dem Terminalprotokoll handelt es sich um das Protokoll RDP;
- bei der ersten Datenverbindung handelt es sich um mindestens eine der folgenden: eine Mobilfunkverbindung, eine Netzwerkverbindung, eine Internetverbindung, eine TCP/IP-Verbindung;
- bei der zweiten Datenverbindung handelt es sich um mindestens eine der folgenden: eine Mobilfunkverbindung, eine Netzwerkverbindung, eine lnternetverbindung, eine TCP/IP-Verbindung;
- das Vermittlungsmodul ist entweder auf dem Terminalserver oder auf einem anderen Server installiert;
- das Vermittlungsmodul umfasst erste Ports für erste Datenverbindungen zu mobilen Geräten und zweite Ports für zweite Datenverbindungen zu Terminalsitzungen des Terminalservers.

3. Verfahren nach Anspruch 1 oder Anspruch 2, **dadurch gekennzeichnet, dass** das mobile Gerät eine Spezialhardware umfasst, deren Anbindung an den Terminalserver über den zusätzlichen Datenübertragungspfad erfolgt.

4. Verfahren nach Anspruch 3, **gekennzeichnet durch** mindestens eines der folgenden Merkmale:
- über den zusätzlichen Datenübertragungspfad werden Steuerbefehle zur Ansteuerung der Spezialhardware übermittelt;
- über den zusätzlichen Datenübertragungspfad werden von der Spezialhardware erfasste Daten übermittelt.

5. Verfahren nach einem der Ansprüche 1 bis 4, **gekennzeichnet durch** folgende weiteren Schritte:
- Starten eines Clientmoduls auf Seiten des mobilen Geräts;
- Aufbau der ersten Datenverbindung **durch** das Clientmodul.

6. Verfahren nach Anspruch 5, **gekennzeichnet durch** folgende weiteren Schritte:
- Hochstarten eines Terminalclient **durch** das Clientmodul auf Seiten des mobilen Geräts;
- Aufbau der Terminalprotokollverbindung **durch** den Terminalclient.

7. Verfahren nach Anspruch 5 oder Anspruch 6, **dadurch gekennzeichnet, dass** das mobile Gerät eine Spezialhardware umfasst, wobei die Spezialhardware durch das Clientmodul gesteuert wird.

8. Verfahren nach einem der Ansprüche 1 bis 7, **gekennzeichnet durch** folgenden weiteren Schritt:
- nach dem Starten der Terminalsitzung auf Seiten des Terminalservers, Starten einer Nutzanwendung innerhalb der Terminalsitzung auf Seiten des Terminalservers.

9. Verfahren nach Anspruch 8, **gekennzeichnet durch** mindestens eines der folgenden Merkmale:
- zusammen mit der Nutzanwendung wird ein zugehöriges Servermodul innerhalb der Terminalsitzung gestartet, wobei der Aufbau der zweiten Datenverbindung **durch** das Servermodul vorgenommen wird;
- die Nutzanwendung wird innerhalb der Terminalsitzung automatisch mittels einer Autostartfunktion gestartet;
- die Nutzanwendung wird innerhalb der Terminalsitzung **durch** eine auf Seiten des mobilen Geräts erfolgende Benutzereingabe gestartet;
- innerhalb der Terminalsitzung werden zwei oder mehr Nutzanwendungen gestartet, wobei für jede der Nutzanwendungen eine separate zweite Datenverbindung zu dem Vermittlungsmodul aufgebaut wird, und wobei der zusätzliche Datenübertragungspfad die erste Datenverbindung und die mindestens zwei zweiten Datenverbindungen umfasst.

10. Verfahren nach einem der Ansprüche 1 bis 9, **gekennzeichnet durch** folgende weiteren Schritte:
- Überwachen der Übertragungsqualität der ersten Datenverbindung und/oder der zweiten Datenverbindung,
- falls die Übertragungsqualität der ersten und/oder der zweiten Datenverbindung nicht mehr zufriedenstellend ist, erneuter Aufbau der ersten und/oder der zweiten Datenverbindung.

11. Verfahren nach einem der Ansprüche 1 bis 10, **gekennzeichnet durch** einen oder mehrere der folgenden Schritte:
- Übermitteln einer Gerätekennung des mobilen Geräts über die erste Datenverbindung an das Vermittlungsmodul;
- auf Seiten des Vermittlungsmoduls, Zuordnen einer Gerätekennung des mobilen Geräts zu der ersten Datenverbindung;
- Übermitteln einer Gerätekennung des mobilen Geräts über die Terminalprotokollverbindung zum Terminalserver;
- Starten der Terminalsitzung auf Seiten des Terminalservers unter einer Gerätekennung des mobilen Geräts;
- Übermitteln einer Gerätekennung des mobilen Geräts über die zweite Datenverbindung von der Terminalsitzung zu dem Vermittlungsmodul;
- auf Seiten des Vermittlungsmoduls, Identifizieren der ersten Datenverbindung und der zweiten Datenverbindung als zusammengehörig anhand einer Gerätekennung des mobilen Geräts.

12. Verfahren nach Anspruch 11, **gekennzeichnet durch** einen der folgenden Schritte:
- die Gerätekennung des mobilen Geräts wird beim Hochstarten des Terminalclient in Form eines Benutzernamens übergeben und anschließend über die Terminalverbindung zum Terminalserver übertragen;
- die Gerätekennung des mobilen Geräts wird beim Hochstarten des Terminalclient mit Hilfe eines RDP Virtual Channels übergeben.

13. Verfahren nach einem der Ansprüche 1 bis 12, **gekennzeichnet durch** folgende Schritte:
- bei oder nach dem Aufbau der ersten Datenverbindung, Erzeugen eines Eintrags in einer auf Seiten des Vermittlungsmoduls vorgesehenen Vermittlungstabelle, welcher die Gerätekennung des mobilen Geräts und eine Identifikation der ersten Datenverbindung umfasst,
- bei oder nach dem Aufbau der zweiten Datenverbindung, Ermitteln eines zu der Gerätekennung des mobilen Geräts vorhandenen Eintrags in der Vermittlungstabelle, und Ergänzen des Eintrags um eine Identifikation der zweiten Datenverbindung.

14. Kommunikationssystem mit einem mobilen Gerät (20), einem Terminalserver (21) und einem Vermittlungsmodul (22), wobei
- das mobile Gerät (20) dazu ausgelegt ist, eine erste Datenverbindung (24) zu dem Vermittlungsmodul (22) aufzubauen und eine Terminalprotokollverbindung (34) zu dem Terminalserver (21) aufzubauen;
- der Terminalserver (21) dazu ausgelegt ist, zur Unterstützung der Terminalprotokollverbindung (34) eine Terminalsitzung (33) zu starten und von der Terminalsitzung (33) aus eine zweite Datenverbindung (38) zu dem Vermittlungsmodul (22) aufzubauen; und
- das Vermittlungsmodul (22) dazu ausgelegt ist, die erste Datenverbindung (24) und die zweite Datenverbindung (38) als zusammengehörig zu identifizieren und zu einem zusätzlichen Datenübertragungspfad zwischen der Terminalsitzung (33) des Terminalservers (21) und dem mobilen Gerät (20) zusammenzuschalten.

15. Kommunikationssystem nach Anspruch 14, **gekennzeichnet durch** mindestens eines der folgenden Merkmale:
- bei dem Terminalprotokoll handelt es sich um das Protokoll RDP;
- bei der ersten Datenverbindung handelt es sich um mindestens eine der folgenden: eine Mobilfunkverbindung, eine Netzwerkverbindung, eine Internetverbindung, eine TCP/IP-Verbindung;
- bei der zweiten Datenverbindung handelt es sich um mindestens eine der folgenden: eine Mobilfunkverbindung, eine Netzwerkverbindung, eine Internetverbindung, eine TCP/IP-Verbindung;
- das Vermittlungsmodul ist entweder auf dem Terminalserver oder auf einem anderen Server installiert;
- das Vermittlungsmodul umfasst erste Ports für erste Datenverbindungen zu mobilen Geräten und zweite Ports für zweite Datenverbindungen zu Terminalsitzungen des Terminalservers.

16. Kommunikationssystem nach Anspruch 14 oder Anspruch 15, **dadurch gekennzeichnet, dass** das mobile Gerät eine Spezialhardware umfasst, deren Anbindung an den Terminalserver über den zusätzlichen Datenübertragungspfad erfolgt.

17. Kommunikationssystem nach einem der Ansprüche 14 bis 16, **dadurch gekennzeichnet, dass** der Terminalserver dazu ausgelegt ist, nach dem Starten der Terminalsitzung innerhalb der Terminalsitzung eine Nutzanwendung zu starten.

18. Kommunikationssystem nach einem der Ansprüche 14 bis 17, **gekennzeichnet durch** mindestens eines von:
- das mobile Gerät ist dazu ausgelegt, eine Gerätekennung des mobilen Geräts über die erste Datenverbindung an das Vermittlungsmodul zu übermitteln, und die Gerätekennung des mobilen Geräts über die Terminalprotokollverbindung zum Terminalserver zu übermitteln;
- der Terminalserver ist dazu ausgelegt, die Terminalsitzung unter einer Gerätekennung des mobilen Geräts zu starten, und die Gerätekennung des mobilen Geräts über die zweite Datenverbindung von der Terminalsitzung zu dem Vermittlungsmodul zu übermitteln;
- das Vermittlungsmodul ist dazu ausgelegt, der ersten Datenverbindung eine Gerätekennung des mobilen Geräts zuzuordnen; und anhand der Gerätekennung des mobilen Geräts die erste Datenverbindung und die zweiten Datenverbindung als zusammengehörig zu identifizieren.

19. Kommunikationssystem nach einem der Ansprüche 14 bis 18, **dadurch gekennzeichnet, dass** das Vermittlungsmodul eine Vermittlungstabelle umfasst, wobei ein Eintrag in der Vermittlungstabelle eine Gerätekennung eines mobilen Geräts, eine Identifikation von einer ersten Datenverbindung und mindestens eine Identifikation von mindestens einer zweiten Datenverbindung umfasst.
